# FASCICULE DE BREVET EUROPEEN

(11) **EP 0 560 641 B1**
(45) Date de publication et mention de la délivrance du brevet: **20.12.1995**
(21) Numéro de dépôt: 93400334.4
(22) Date de dépôt: 10.02.1993
(51) Int. Cl.: C23C 22/78, C23C 8/80

(54) **Procédé de phosphatation de pièces en acier, pour améliorer leur résistance à la corrosion et à l'usure**
Verfahren zur Phosphatierung von Stahlteilen, zur Verbesserung ihrer Korrosions- und Verschleissfestigkeit
Phosphating method of steel pieces in order to improve their corrosion and wear resistance

(30) Priorité: 10.03.1992 FR 9202826
(43) Date de publication de la demande: 15.09.1993
(73) Titulaire: CENTRE STEPHANOIS DE RECHERCHES MECANIQUES HYDROMECANIQUE ET FROTTEMENT Société dite:, F-42160 Andrezieux Boutheon (FR)
(72) Inventeur: Wawra, Joseph, F-42170 Saint-Just/Saint-Rambert (FR); Poirson, Jean-Marc, F-42100 Saint-Etienne (FR)
(74) Mandataire: CABINET BONNET-THIRION

(56) Documents cités:
- FR-A- 1 057 237
- FR-A- 2 171 993
- PATENT ABSTRACTS OF JAPAN vol. 10, no. 71 (C-334)(2128) 20 mars 1986
- PATENT ABSTRACTS OF JAPAN vol. 9, no. 108 (C-280)(1831) 11 mai 1985

## Description

La présente invention concerne un procédé de phosphatation de pièces en acier, pour améliorer leurs résistances à la corrosion et à l'usure et plus particulièrement, un traitement préalable de la surface des pièces.

On sait que les performances des pièces ayant subi une phosphatation, quelle que soit leur application, dépendent essentiellement de deux caractéristiques : la cristallinité et la qualité d'adhérence de la couche phosphatée sur un substrat.

Ces deux caractéristiques sont directement dépendantes de la qualité de la préparation de la surface métallique avant l'opération proprement dite de phosphatation. L'état physico-chimique de cette surface conditionne en effet sa réactivité vis-à-vis des agents actifs du bain de phosphatation, ainsi que la croissance épitaxique de la couche de phosphates complexes.

D'une façon générale, on cherche alors à obtenir une cristallisation fine et régulière, conduisant à une couche la plus dense possible.

Sur l'ensemble du processus d'édification de la couche, c'est l'étape de germination qui, pour l'obtention de cet effet, joue le rôle prépondérant. C'est pourquoi, on a recherché des techniques capables d'activer au maximum la surface métallique et d'y créer le plus grand nombre possible de sites de germination. On connaît un certain nombre de solutions.

Une des solutions consiste à effectuer un polissage électrolytique du substrat d'acier suivi d'une dépassivation ou un sablage avec un abrasif coupant.

Une autre solution consiste à effectuer un "ensemencement" de la surface en germes de cristallisation, par exemple, par une opération de prérinçage de l'acier de base avec une suspension de sels de titane.

Une autre solution encore, consiste à adapter la composition du bain de phosphatation, par exemple par l'emploi d'additifs tels que certains sels de nickel ou de cadmium.

Enfin, on connaît également des techniques du type dites "par pulvérisation", où l'action de jets induit une cristallisation aciculaire.

Par ailleurs, on sait que tous les aciers ne peuvent être phosphatés, notamment ceux contenant plus de 5% d'éléments d'addition métalliques tels que Cr, Mo et Ni, avec lesquels on obtiendrait des couches peu cohérentes. Cet effet, peut dans certaines mesures, être atténué par un réglage spécial de l'acidité du bain de phosphatation, ou bien par une dépassivation préalable.

Pour les applications traditionnelles et lorsque l'on n'exige pas des pièces de qualités exceptionnelles, les techniques rappelées ci-dessus apportent des résultats satisfaisants aux industriels, par exemple une résistance à la corrosion pouvant aller de 50 à 100 heures d'exposition en brouillard salin ou par exemple encore, une amélioration des conditions de rodage pendant les toutes premières heures de ce dernier.

Par contre, dès lors que les exigences de résistances à la corrosion et à l'usure deviennent plus sévères, ces solutions s'avèrent insuffisantes. D'autres procédés ont donc été développés.

Comme par exemple, dans le document DE-A-28 53 542, qui enseigne qu'une bonne protection contre la corrosion de pièces en acier, peut être obtenue en réalisant dans un premier temps une nitruration des pièces, puis dans un deuxième temps une phosphatation, et plus particulièrement une phosphatation au manganèse.

Des variantes de cette technologie sont décrites dans les documents JP-A-53-001647 et SU-A-926070.

Mais ici encore, compte tenu des exigences techniques sans cesse croissantes en matière de résistances à l'usure et à la corrosion, les propriétés conférées aux pièces par ces procédés s'avèrent aujourd'hui également souvent insuffisantes. Elles ne permettent pas notamment, de garantir les 400 heures de résistance au brouillard salin souhaitées par l'industrie automobile. Sur des engrenages en acier carbonitruré fortement sollicités, la phosphatation superficielle est entièrement éliminée en à peine plus d'une dizaine d'heures, c'est-à-dire de l'ordre de grandeur du temps de rodage, avec par conséquent disparition au bout de ce laps de temps de l'effet bénéfique de la couche phosphatée sur la rétention et donc la stabilité des films lubrifiants.

La présente invention a pour but de pallier ces insuffisances en permettant :
- d'une part d'obtenir une activation de la surface très nettement supérieure, avec multiplication des sites de germination, ce qui conduit à l'obtention de façon parfaitement fiable et reproductible de couches phosphatées à la fois, très denses, finement cristallisées et très adhérentes;
- d'autre part, de ne pas limiter le support de la phosphatation aux couches nitrurées comme c'était le cas dans le procédé décrit dans le document DE-A-28 53 542;
- et enfin, d'élargir le champ d'application de la phosphatation à d'autres aciers que ceux contenant moins de 5% d'éléments d'addition métalliques.

A cet effet, la présente invention propose, un procédé de phosphatation de pièces en acier, pour améliorer leurs résistances à la corrosion et à l'usure, où, après un traitement préalable de la surface des pièces, celle-ci est mise en contact avec une solution contenant, pour l'essentiel, des protons, des anions phosphates et des cations pris parmi Ca²⁺, Zn²⁺ et Mn²⁺, caractérisé en ce que le traitement préalable est un traitement en bain de sels en présence d'espèces soufrées provoquant la formation d'une couche de composés de fer avec au moins un élément pris parmi le carbone et l'azote, et une diffusion thermique réciproque des composés de la couche et du fer de la pièce en sorte que la surface de celle-ci comporte, pour 1 000 atomes, au moins 150 atomes de fer libre et 5 à 150 atomes de soufre, et présente une porosité définie par un rapport de surface réelle à surface macroscopique d'au moins 20.

On procède ainsi, dans le traitement préalable, simultanément, à un traitement thermochimique de diffusion entre le fer du substrat et un ou plusieurs métalloïdes d'apport du type azote et/ou carbone, et à un apport d'espèces soufrées.

Selon une variante, dans le traitement préalable, l'apport en espèces soufrées est réalisé indépendamment dans un second temps. On procède, tout comme dans le procédé énoncé ci-dessus, d'abord à une diffusion thermochimique entre le fer du substrat et un ou plusieurs métalloïdes d'apport du type azote et/ou carbone, puis à une opération classique de sulfuration.

Selon une autre variante, l'apport en espèces soufrées est réalisé également dans un deuxième temps par une opération de sulfuration et l'étape de diffusion est réalisée par un dépôt d'un métal susceptible de former des composés intermétalliques avec le fer, avec diffusion thermique réciproque des composés intermétalliques et du fer de la pièce, ce métal étant par exemple du chrome ou de l'étain.

Les opérations de diffusion thermochimiques en bains de sels fondus, avec ou sans espèces soufrées, sont réalisées par exemple selon les enseignements des brevets FR-A-2 171 993 et FR-A-2 271 307, où l'on immerge les pièces en acier dans un bain comportant des cyanates, des carbonates et/ou des ions S²⁻.

L'opération de sulfuration est menée par exemple selon les enseignements du brevet FR-A-2 050 754 en bains de sels fondus.

Elle peut également être exécutée par implantation ionique de soufre.

La diffusion thermique par dépôt d'un métal est réalisée selon les techniques classiques dites de cémentation.

Grâce aux procédés de l'invention, on obtient, après le traitement préalable, une couche en surface qui présente les trois caractéristiques suivantes :
- elle contient du fer libre actif, à raison d'au moins 150 atomes pour 1 000 atomes;
- elle contient également du soufre, libre ou combiné, à raison de 5 à 150 atomes pour 1 000 atomes;
- et son aire réelle est au moins 20 fois supérieure à son aire apparente, sans pour autant qu'elle soit pulvérulente ou qu'elle ait la consistance d'une mousse.

L'invention résulte de l'effet synergique inattendu dû à l'association de ces trois caractéristiques.

La présente invention sera mieux comprise à la lumière de la description qui va suivre illustrée d'exemples expérimentaux.

### Exemple 1 : Tests de résistance à la corrosion

On réalise une série d'expériences sur des bagues en acier non allié à 0,38% de carbone, de diamètre 35 mm et de hauteur 15 mm, rectifiées.

Dans chaque expérience, on procède à un traitement préalable différent, conduisant à la formation d'une couche superficielle présentant des caractéristiques différentes.

On fait ensuite subir aux pièces une phosphatation dans les mêmes conditions opératoires, par immersion pendant 15 minutes dans un bain type Zinc/Fer, à la température de 90°C, et dont la composition est la suivante:
- 12 g/l de P₂O₅
- 5 g/l de NO₃⁻
- 6 g/l de Zn²⁺
- 2,5 g/l de Fe²⁺

On mesure ensuite la résistance à la corrosion des pièces traitées en brouillard salin normalisé.

### Expérience 1 :

On immerge les bagues en acier dans un bain de nitruration selon les enseignements des brevets FR-A-2 171 993 et FR-A-2 271 307, contenant en poids 37% des ions carbonates alcalins, des ions cyanates et 10 ppm d'ions S²⁻, la température des sels en fusion étant de 570°C et la durée d'immersion des pièces de 90 min. A leur sortie du bain les pièces sont lavées à l'eau, de manière à les libérer de la gangue de sels qui les entoure, puis séchées.

Ce traitement conduit à la formation à la surface des pièces d'une couche nitrurée conforme à la présente invention qui présente les caractéristiques suivantes :
- la partie externe est poreuse, avec une surface réelle des bagues environ 25 fois supérieure à leur surface apparente;
- elle renferme des espèces soufrées à raison de 20 atomes pour 1 000 d'éléments soufre;
- elle renferme également du fer libre, à raison de 300 atomes pour 1 000.

Les pièces sont ensuite phosphatées puis soumises à des essais de corrosion en brouillard salin normalisé. On constate qu'elles résistent au minimum 700 heures et pour certaines plus de 1 200 heures, la moyenne sur une série de 50 s'établissant à 900 heures.

### Expérience 2 :

On se place dans les conditions opératoires du traitement préalable de l'expérience 1, toutes choses étant égales, excepté que le bain de nitruration est exempt de soufre.

La nitruration conduit à la formation en surface d'une couche:
- qui contient environ 350 atomes pour 1 000 de fer libre;
- qui présente une surface réelle 20 fois supérieure à l'aire apparente.

En comparaison avec la couche nitrurée obtenue dans les conditions de l'expérience 1, la couche ne contient pas d'espèces soufrées, mais les autres caractéristiques, teneur en fer libre et aire réelle par rapport à aire apparente, sont du même ordre de grandeur.

On constate pour les pièces phosphatées, une résistance à la corrosion au brouillard salin ne dépassant pas 350 heures.

Cette expérience montre bien l'importance de la présence du soufre dans la couche externe puisqu'en l'absence d'espèces soufrées, la résistance chute de 900 heures à 350 heures.

### Expérience 3 :

On fait subir aux bagues un décapage chimique suivi d'un sablage, de sorte que leur surface réelle soit de 2 à 3 fois supérieure à leur surface apparente.

Après phosphatation, les essais en brouillard salin montrent une résistance à la corrosion d'en moyenne 70 heures, ce qui est conforme aux résultats couramment obtenus avec les techniques traditionnelles.

Cette expérience montre l'amélioration considérable de la résistance à la corrosion apportée par l'invention, en comparaison avec les techniques traditionnelles, puisque, dans l'expérience 1, on atteint des résistances à la corrosion allant jusqu'à 1 200 heures de résistance en brouillard salin.

### Expérience 4 :

On reprend les pièces de l'expérience 3, qui ont été décapées chimiquement puis sablées, et on effectue ensuite une sulfuration (selon les enseignements des brevets FR-A-2 171 993 et FR-A-2 271 307), par immersion dans un bain de sels fondus contenant du thiocyanate de potassium, du thiocyanate de sodium et du cyanure de potassium et/ou de sodium, et en réduisant la durée de cette immersion à quelques secondes seulement, au lieu des 2 à 3 minutes classiques, de manière à réaliser non pas une sulfuration totale, mais à obtenir en surface une teneur en soufre limitée à environ 100 atomes pour 1 000.

Les essais en brouillard salin montrent une résistance à la corrosion ne dépassant pas 250 heures.

### Observations :

Ces expériences confirment bien l'effet synergique apporté par les trois caractéristiques que l'on s'est fixées pour la surface avant phosphatation, concernant la teneur en fer libre, en soufre et l'aire réelle/aire apparente.

En se plaçant dans les conditions de l'invention, on obtient des valeurs de résistance à la corrosion très nettement supérieures puisque l'on passe d'environ 300 heures de résistance à 900 heures en moyenne et même voire 1 200 heures.

On notera cependant que dans le cas de l'expérience 4, le non-respect de la spécification sur le rapport entre les surfaces réelle et apparente, ne permet pas, de loin, d'atteindre la performance des 900 heures en moyenne de la première expérience.

### Exemple 2 : Essais de résistance à l'usure

On teste des engrenages en acier 35 NC 6 trempé revenu, de diamètre primitif 240 mm et de module 8, que l'on fait fonctionner sur une machine adéquate avec une vitesse de rotation de 1 660 tr/min., en transmettant un couple de 450 mN.

Une première expérience en l'absence de traitement superficiel des engrenages, montre que le rodage ne s'effectue pas dans de bonnes conditions. Après 15 heures de marche on relève de nombreuses rayures sur les flancs des dents.

Dans une seconde expérience, on fait subir aux engrenages, un traitement préalable classique avant phosphatation. On constate alors sur les pièces phosphatées, après le même laps de temps de 15 heures de fonctionnement, que les flancs des dents sont polis. Le rodage s'est cette fois réalisé dans de bonnes conditions. Par contre, on constate que la totalité de la couche phosphatée a disparu, laissant l'acier à nu. On observe également que tant que la lubrification est correctement assurée, les engrenages peuvent continuer à fonctionner normalement. Par contre, si on provoque une défaillance dans la lubrification, par exemple par suite de son interruption momentanée, on observe que le frottement se dégrade très vite : des vibrations apparaissent et au démontage les flancs des dents sont profondément rayés.

Enfin, dans une dernière expérience, on réalise une phosphatation selon l'invention, c'est-à-dire avec un traitement préalable de la surface par nitruration avec apport de soufre, dans les mêmes conditions que dans l'expérience 1 de l'exemple 1. On constate alors que la durée de vie de la couche phosphatée est très sensiblement améliorée. Après 150 heures de fonctionnement des engrenages, la couche phosphatée n'est toujours pas consommée. Elle peut donc toujours jouer son rôle. Ainsi, si on provoque une défaillance momentanée de la lubrification, les états de surface des dents restent intacts, et une fois le régime normal de lubrification rétabli, le frottement peut reprendre dans de bonnes conditions.

### Exemple 3 :

On utilise les mêmes bagues qu'à l'exemple 1, et on réalise avant phosphatation un traitement préalable mettant en oeuvre une autre technique de diffusion thermique, en se fixant des caractéristiques identiques pour la couche superficielle à obtenir.

On effectue dans une première étape une diffusion thermochimique de chrome dans l'acier, selon le procédé dit de chromisation, appelé aussi cémentation par le chrome, à une température de 1 000°C.

On obtient ainsi une couche de carbures mixtes, contenant du fer libre dont la partie externe finement poreuse présente une grande surface spécifique.

Dans une seconde étape, on enrichit cette couche en soufre, par la technique dite d'implantation ionique, sous faisceau d'ions de forte énergie, en faisant suivre, ou bien en accompagnant, cette implantation d'un traitement thermique à une température de 250°C pendant 30 minutes.

Les pièces ainsi préparées sont alors phosphatées dans les mêmes conditions que dans l'exemple 1.

On fait alors subir aux pièces phosphatées les essais de corrosion au brouillard salin normalisé. Après 1 000 heures on n'observe aucune piqûre de corrosion.

Par comparaison, des pièces chromisées de la même façon mais n'ayant pas été soumises à l'implantation de soufre, ne résistent pas plus de 300 à 400 heures.

### Exemple 4 :

On teste des broches de fixation pour aubages de turbines vapeur, en acier, de forme cylindrique et qui assurent la liaison entre le disque et les ailettes.

Ces pièces subissent en service de sévères sollicitations de corrosion de contact ("fretting corrosion") ainsi que de corrosion par la vapeur d'eau. Elles doivent aussi résister au grippage et à la rayure lors des opérations d'emmanchement et de démontage, soit à la première mise en place, soit lors des révisions périodiques.

Un traitement de phosphatation effectué dans les conditions classiques sur ces broches, leur permet tout au plus de résister quelques dizaines d'heures à la corrosion et ne garantit des risques de dégradation par frottement qu'au premier montage.

On fait subir aux broches une phosphatation précédée du traitement suivant. On procède à un dépôt électrolytique d'étain, suivi d'un traitement thermique en atmosphère neutre d'azote, de manière à réaliser à la surface des pièces une couche métallique de diffusion finement poreuse et contenant du fer libre, que l'on enrichit légèrement en soufre par l'un des moyens décrits aux exemples précédents (implantation ionique ou diffusion thermique).

On constate alors une tenue en service de plusieurs centaines, voire de plusieurs milliers d'heures, avec montages-démontages périodiques.

Compte tenu des résultats des expériences de ces exemples, on a tenté de remonter des phénomènes constatés aux mécanismes théoriques probables.

Le mécanisme réactionnel de la phosphatation est relativement complexe ; il fait schématiquement intervenir d'abord une attaque par l'acide phosphorique du métal constituant la pièce à traiter (en général le fer de l'acier), puis une précipitation de phosphates insolubles, généralement du type (PO₄)₂ Me₃ (Me étant Zn, Ca ou Mn), mais aussi (HPO₄)₂ Me₂, (HPO₄)₂ Fe₂, (HPO₄)₂ MeFe.

On est donc en présence de réactions en phase hétérogène liquide/solide, lesquelles sont d'autant plus aisées que la phase solide est plus divisée. D'où l'intérêt à ce que la surface de la pièce à traiter présente de nombreuses et fines porosités, c'est-à-dire ait une grande surface spécifique.

En pratique, il existe cependant un seuil de porosité au-delà duquel la cohésion des couches de surface n'est plus suffisante pour permettre à la pièce de remplir ses fonctions mécaniques et tribologiques.

La présence de fer actif est également indispensable pour qu'ait lieu la réaction d'attaque entre le fer et l'acide phosphorique contenu dans le bain.

Parmi les techniques dont le praticien dispose pour réaliser simultanément les deux effets précédents, celles basées sur des mécanismes thermochimiques de diffusion de métaux et/ou de métalloïdes sont d'un grand intérêt industriel, car elles allient commodité de mise en oeuvre et faible coût de réalisation.

Dans ces techniques, la présence de fer actif au voisinage de la surface est liée à la migration de cet élément à travers la couche de diffusion depuis le substrat en acier. Quant aux fines porosités superficielles, elles sont générées par l'effet KIRKENDALL, c'est-à-dire l'effet lié à la différence de mobilité des atomes des éléments entrant dans la composition de la couche de diffusion.

En ce qui concerne le rôle du soufre, l'idée directrice qui est à l'origine de son interprétation est en relation avec le mécanisme de la phosphatation du fer, qui met en jeu l'oxydation (au sens de degré d'oxydation) de ce fer et la combinaison du fer oxydé avec les ions phosphates.

On peut donc penser que l'opération de phosphatation est facilitée en la réalisant sur une surface préalablement oxydée, où le fer serait stabilisé par une espèce conduisant à une réaction réversible, de sorte que la combinaison fer-phosphore ultérieure s'effectue par une réaction d'échange : de la sorte on ferait l'économie d'une part importante de l'énergie mise en jeu pour phosphater le fer.

On notera que l'espèce stabilisante ci-dessus ne saurait être l'oxygène lui-même, car il conduirait à des composés thermodynamiquement trop stables.

Par contre, le soufre est un intermédiaire intéressant et ceci pour les principales raisons suivantes :
- les composés fer-soufre, type Fe₍₁₋ₓ₎ S avec x ≦ 1, qui existent dans un large domaine du rapport Fe/S, correspondent à une forme oxydée du métal ;
- ils correspondent également à un équilibre réversible, dans lequel le soufre peut être facilement échangé contre un autre élément ou ion plus donneur d'électrons ;
- ils peuvent être facilement réduits par les acides ou les métaux réducteurs comme le zinc, de sorte qu'on peut considérer que leur passage dans le bain de phosphatation les libère du substrat et qu'ils ne jouent qu'un rôle intermédiaire, analogue à celui que jouent les catalyseurs en chimie.

## Revendications

1. Procédé de phosphatation de pièces en acier, pour améliorer leurs résistances à la corrosion et à l'usure, où, après un traitement préalable de la surface des pièces, celle-ci est mise en contact avec une solution contenant, pour l'essentiel, des protons, des anions phosphates et des cations pris parmi Ca²⁺, Zn²⁺ et Mn²⁺, caractérisé en ce que le traitement préalable est un traitement en bain de sels en présence d'espèces soufrées provoquant la formation d'une couche de composés de fer avec au moins un élément pris parmi le carbone et l'azote, et une diffusion thermique réciproque des composés de la couche et du fer de la pièce en sorte que la surface de celle-ci comporte, pour 1 000 atomes, au moins 150 atomes de fer libre et 5 à 150 atomes de soufre, et présente une porosité définie par un rapport de surface réelle à surface macroscopique d'au moins 20.

2. Procédé suivant la revendication 1, caractérisé en ce que le bain de sels comporte des cyanates et carbonates alcalins, avec 10 ppm de soufre S²⁻.

3. Procédé de phosphatation de pièces en acier, pour améliorer leurs résistances à la corrosion et à l'usure, où, après un traitement préalable de la surface des pièces, celle-ci est mise en contact avec une solution contenant, pour l'essentiel, des protons, des anions phosphates et des cations pris parmi Ca²⁺, Zn²⁺ et Mn²⁺, caractérisé en ce que le traitement préalable comporte une phase en bain de sels provoquant la formation d'une couche de composés de fer avec au moins un élément pris parmi le carbone et l'azote et une diffusion thermique réciproque de composés de la couche et du fer de la pièce, puis une phase de sulfuration, en sorte que la surface de la pièce comporte, pour 1 000 atomes, au moins 150 atomes de fer libre et de 5 à 150 atomes de soufre, et présente une porosité définie par un rapport de surface réelle à surface macroscopique d'au moins 20.

4. Procédé suivant la revendication 3, caractérisé en ce que le bain de sels comporte des cyanates et des carbonates alcalins.

5. Procédé suivant l'une des revendications 2 et 4, caractérisé en ce que le bain de sels étant à 570°C ± 15°C, les pièces y sont immergées pendant 90 min. ± 15 min.

6. Procédé de phosphatation de pièces en acier, pour améliorer leurs résistances à la corrosion et à l'usure, où, après un traitement préalable de la surface des pièces, celle-ci est mise en contact avec une solution contenant, pour l'essentiel, des protons, des anions phosphates et des cations pris parmi Ca²⁺, Zn²⁺ et Mn²⁺, caractérisé en ce que le traitement préalable comporte une phase de dépôt d'un métal susceptible de former des composés intermétalliques avec le fer, avec diffusion thermique réciproque des composés intermétalliques et du fer de la pièce, puis une phase de sulfuration, en sorte que la surface de la pièce comporte, pour 1 000 atomes, au moins 150 atomes de fer libre et de 5 à 150 atomes de soufre, et présente une porosité définie par un rapport de surface réelle à surface macroscopique d'au moins 20.

7. Procédé suivant la revendication 6, caractérisé en ce que le métal est du chrome, la diffusion étant opérée aux environs de 1 000°C.

8. Procédé suivant la revendication 6, caractérisé en ce que le métal est de l'étain déposé électrolytiquement, la diffusion étant opérée entre 300°C et 600°C en atmosphère d'azote.

9. Procédé suivant l'une des revendications 3 et 6, caractérisé en ce que la phase de sulfuration comporte une électrolyse en bain de thiocyanates alcalins fondus.

10. Procédé suivant l'une des revendications 3 et 6, caractérisé en ce que la phase de sulfuration est exécutée par implantation ionique de soufre.

11. Procédé suivant l'une des revendications 9 et 10, caractérisé en ce que la phase de sulfuration comporte une diffusion à au moins 180°C.

## Claims

1. Method for phosphating steel parts to improve their resistance to corrosion and wear, in which, after a preliminary treatment of the surface of the parts, the latter is brought into contact with a solution containing essentially protons, phosphate anions and cations selected from amongst Ca²⁺, Zn²⁺ and Mn²⁺, characterised in that the preliminary treatment is a salt bath treatment in the presence of sulphur-containing species causing the formation of a layer of iron compounds with at least one element selected from carbon and nitrogen, and reciprocal thermal diffusion of the compounds of the layer and of the iron of the part so that the surface of the latter comprises, per 1000 atoms, at least 150 atoms of free iron and 5 to 150 atoms of sulphur, and has a porosity defined by a ratio of actual surface area to macroscopic surface area of at least 20.

2. Method according to Claim 1, characterised in that the salt bath includes alkaline carbonates and cyanates, with 10 ppm of sulphur S²⁻.

3. Method for phosphating steel parts to improve their resistance to corrosion and wear, in which, after a preliminary treatment of the surface of the parts, the latter is brought into contact with a solution containing essentially protons, phosphate anions and cations selected from amongst Ca²⁺, Zn²⁺ and Mn²⁺, characterised in that the preliminary treatment includes a salt bath phase causing the formation of a layer of iron compounds with at least one element selected from carbon and nitrogen and reciprocal thermal diffusion of compounds of the layer and of the iron in the part, and then a sulphuration phase, so that the surface of the part has, per 1000 atoms, at least 150 atoms of free iron and 5 to 150 atoms of sulphur, and has a porosity defined by a ratio of actual surface area to macroscopic surface area of at least 20.

4. Method according to Claim 3, characterised in that the salt bath includes alkaline carbonates and cyanates.

5. Method according to one of Claims 2 and 4, characterised in that, the salt bath being at 570°C ± 15°C, the parts are immersed therein for 90 minutes ± 15 minutes.

6. Method for phosphating steel parts to improve their resistance to corrosion and wear, in which, after a preliminary treatment of the surface of the parts, the latter is brought into contact with a solution containing essentially protons, phosphate anions and cations selected from amongst Ca²⁺, Zn²⁺ and Mn²⁺, characterised in that the preliminary treatment includes a phase consisting of depositing a metal capable of forming intermetallic compounds with the iron, with reciprocal thermal diffusion of the intermetallic compounds and the iron in the part, and then a sulphuration phase, so that the surface of the part has, per 1000 atoms, at least 150 atoms of free iron and 5 to 150 atoms of sulphur, and has a porosity defined by a ratio of actual surface area to macroscopic surface area of at least 20.

7. Method according to Claim 6, characterised in that the metal is chromium, diffusion being carried out in the region of 1000°C.

8. Method according to Claim 6, characterised in that the metal is electrolytically deposited tin, diffusion being carried out at between 300°C and 600°C in a nitrogen atmosphere.

9. Method according to one of Claims 3 and 6, characterised in that the sulphuration phase includes electrolysis in a bath of molten alkaline thiocyanates.

10. Method according to one of Claims 3 and 6, characterised in that the sulphuration phase is carried out through sulphur ion implantation.

11. Method according to one of Claims 9 and 10, characterised in that the sulphuration phase includes diffusion at at least 180°C.

## Patentansprüche

1. Verfahren zum Phosphatieren von Teilen aus Stahl, zur Verbesserung ihrer Widerstandsfähigkeit gegen Korrosion und gegen Abnutzung, wobei nach einer vorausgehenden Behandlung der Oberfläche der Teile dieses in Kontakt gebracht wird mit einer Lösung, die im wesentlichen Protonen, Phosphatanionen und Kationen enthält, die aus Ca²⁺, Zn²⁺ und Mn²⁺ gewählt sind, dadurch gekennzeichnet, daß die vorausgehende Behandlung eine Salzbad-Behandlung in Gegenwart von mit Schwefel behandelten Sorten ist, die die Bildung einer Schicht aus Eisenverbindungen hervorruft mit wenigstens einem Element, das gewählt ist unter Kohlenstoff und Stickstoff, und einer gegenseitigen thermischen Diffusion der Verbindungen der Schicht und des Eisens des Teils derart, daß die Oberfläche dessen auf 1000 Atome wenigstens 150 Atome von freiem Eisen und 5 bis 150 Atome von Schwefel aufweist, und eine Porosität zeigt, die definiert ist durch ein Verhältnis der realen Oberfläche zur makroskopischen Oberfläche von wenigstens 20.

2. Verfahren nach Anspruch 1, dadurch gekennzeichnet, daß das Salzbad Alkalicyanate und-carbonate mit 10 ppm von Schwefel S²⁻ aufweist.

3. Verfahren zum Phosphatieren von Teilen aus Stahl, zur Verbesserung ihrer Widerstandsfähigkeit gegen Korrosion und gegen Abnutzung, wobei nach einer vorausgehenden Behandlung der Oberfläche der Teile, dieses in Kontakt gebracht wird mit einer Lösung, die im wesentlichen Protonen, Phosphatanionen und Kationen aufweist, die gewählt sind unter Ca²⁺ Zn²⁺, und Mn²⁺, dadurch gekennzeichnet, daß die vorausgehende Behandlung eine Salzbad-Phase aufweist, die die Bildung einer Schicht aus Eisenverbindungen hervorruft mit wenigstens einem Element, das unter Kohlenstoff und Stickstoff gewählt ist, und einer gegenseitigen thermischen Diffusion der Verbindungen der Schicht und des Eisens des Teils, plus einer Schwefelungs-Phase, derart, daß die Oberfläche des Teils auf 1000 Atome wenigstens 150 Atome von freiem Eisen und zwischen 5 und 150 Atome von Schwefel aufweist, und eine Porosität zeigt, die definiert ist durch ein Vehältnis der realen Oberfläche zur makroskopischen Oberfläche von wenigstens 20.

4. Verfahren nach Anspruch 3, dadurch gekennzeichnet, daß das Salzbad Alkalicyanate und -carbonate aufweist.

5. Verfahren nach einem der Ansprüche 2 und 4, dadurch gekennzeichnet, daß das Salzbad bei 570° C +/- 15° C liegt, wobei die Teile darin während 90 min. +/- 15 min. eingetaucht sind.

6. Verfahren zum Phosphatieren von Teilen aus Stahl, zur Verbesserung ihrer Widerstandsfähigkeit gegen Korrosion und Abnutzung, wobei nach einer vorausgehenden Behandlung der Oberfläche der Teile dieses in Kontakt gebracht wird mit einer Lösung, die im wesentlichen Protonen, Phosphatanionen und Kationen enthält, die unter Ca²⁺, Zn²⁺ und Mn²⁺ gewählt sind, dadurch gekennzeichnet, daß die vorausgehende Behandlung eine Phase der Ablagerung bzw. Abscheidung eines Metalls aufweist, das geeignet ist, intermetallische Verbindungen mit Eisen zu bilden, mit einer gegenseitigen thermischen Diffusion der intermetallischen Verbindungen und des Eisens des Teils, plus einer Schwefelungs-Phase, derart, daß die Oberfläche des Teils auf 1000 Atome wenigstens 150 Atome von freiem Eisen und zwischen 5 und 150 Atome von Schwefel aufweist, und eine Porosität zeigt, die definiert ist durch ein Verhältnis der realen Oberfläche zur makroskopischen Oberfläche von wenigstens 20.

7. Verfahren nach Anspruch 6, dadurch gekennzeichnet, daß das Metall Chrom ist, wobei die Diffusion bei etwa 1000° C betrieben wird.

8. Verfahren nach Anspruch 6, dadurch gekennzeichnet, daß das Metall elektrolytisch abgeschiedenes Zinn ist, wobei die Diffusion betrieben wird zwischen 300° C und 600° C in einer Stickstoff-Atmosphäre.

9. Verfahren nach einem der Ansprüche 3 und 6, dadurch gekennzeichnet, daß die Schwefelungs-Phase eine Elektrolyse im Bad von verflüssigten Alkalithiocyanaten aufweist.

10. Verfahren nach einem der Ansprüche 3 und 6, dadurch gekennzeichnet, daß die Schwefelungs-Phase durch Ionenimplantation von Schwefel ausgeführt wird.

11. Verfahren nach einem der Ansprüche 9 und 10, dadurch gekennzeichnet, daß die Schwefelungsphase eine Diffusion bei wenigstens 180° C aufweist.
